# FASCICULE DE BREVET EUROPEEN

(11) **EP 3 609 722 B1**
(45) Date de publication et mention de la délivrance du brevet: **15.12.2021**
(21) Numéro de dépôt: 18718617.6
(22) Date de dépôt: 05.04.2018
(51) Int. Cl.: B60C 1/00, C08L 23/08

(54) **COMPOSITION DE CAOUTCHOUC A BASE D'UN ELASTOMERE DIENIQUE FORTEMENT SATURE ET D'UN SEL DITHIOSULFATE**
KAUTSCHUKZUSAMMENSETZUNG AUS EINEM HOCHGESÄTTIGTEN DIENELASTOMER UND EINEM DITHIOSULFATSALZ
RUBBER COMPOSITION MADE FROM A HIGHLY SATURATED DIENE ELASTOMER AND A DITHIOSULFATE SALT

(30) Priorité: 10.04.2017 FR 1753107
(43) Date de publication de la demande: 19.02.2020
(73) Titulaire: COMPAGNIE GENERALE DES ETABLISSEMENTS MICHELIN, 63000 Clermont-Ferrand (FR)
(72) Inventeur: ARAUJO DA SILVA, José-Carlos, 63040 Clermont-Ferrand Cedex 9 (FR); TRIGUEL, Aurélie, 63040 Clermont-Ferrand Cedex 9 (FR); CROCHET, Aurore, 63040 Clermont-Ferrand Cedex 9 (FR)
(74) Mandataire: Gandon-Pain, Sylvie
(86) Numéro de dépôt international: PCT/FR2018/050850
(87) Numéro de publication internationale: WO 2018/189456

(56) Documents cités:
- EP-A1- 1 199 331
- CN-A- 105 218 882
- JP-A- 2017 002 164
- US-A1- 2010 137 519
- US-A1- 2015 353 716

## Description

La présente invention concerne des compositions de caoutchouc diéniques, notamment utilisables pour la fabrication de pneumatiques.

Idéalement, une composition de caoutchouc destinée à être utilisée dans un pneumatique doit obéir à un grand nombre d'exigences techniques, souvent antinomiques, par exemple présenter une rigidité élevée et une hystérèse faible.

Il est connu de la demande de brevet WO 2014114607 qu'une composition davantage rigide peut être obtenue en remplaçant les élastomères diéniques fortement insaturés, c'est-à-dire comportant plus de 50% en mole d'unité diénique, par des élastomères fortement saturés contenant plus de 50% en mole d'unité éthylène. Ces élastomères fortement saturés présentent aussi l'avantage de conférer aux compositions de caoutchouc un compromis entre les propriétés de rigidité et d'hystérèse différent des élastomères diéniques fortement insaturés conventionnellement utilisés dans les compositions de caoutchouc, comme par exemple les polybutadiènes, les polyisoprènes et les copolymères de butadiène et de styrène.

Pour un même élastomère, le niveau de rigidité de la composition de caoutchouc est aussi défini par le degré de vulcanisation de l'élastomère qui dépend à la fois de la cinétique de vulcanisation et du temps de séjour de la composition de caoutchouc dans la presse de cuisson. Il est connu que les compositions de caoutchouc continuent à cuire, même une fois sorties des presses de cuisson. La poursuite de la cuisson en dehors des presses est d'autant plus importante que la composition de caoutchouc se présente sous la forme d'un objet massif. Si la rigidification de la composition de caoutchouc n'est pas suffisante à la sortie de la presse, la viscosité de la composition de caoutchouc permet alors la formation de bulle au sein de la composition de caoutchouc quand la cuisson se poursuit en dehors de la presse. La formation de bulle au sein de la composition de caoutchouc représente des défauts d'homogénéité dans la composition de caoutchouc et peut entrainer une diminution de l'endurance du pneumatique contenant la composition de caoutchouc. Il est donc souhaitable qu'en fin de cuisson dans la presse la composition de caoutchouc ait atteint une rigidité suffisante pour empêcher la formation de bulles.

Les élastomères fortement saturés qui contiennent plus de 50% en mole d'unité éthylène ont la particularité de vulcaniser selon une cinétique plus lente que les élastomères fortement insaturés qui contiennent plus de 50% en moles d'unités diéniques. Des temps de séjour plus longs dans les presses de cuisson sont donc nécessaires pour vulcaniser les compositions de caoutchouc contenant les élastomères fortement saturés, surtout si l'on souhaite éviter les phénomènes de bullage évoqués précédemment. La moindre réactivité des élastomères fortement saturés vis-à-vis de la vulcanisation se traduit donc par un temps d'occupation des presses plus long par composition de caoutchouc et donc des cycles de production plus longs, ce qui a pour effet de diminuer la productivité des sites de fabrication de pneumatique.

Pour réduire le temps de séjour dans les presses sans être au détriment de la rigidité de la composition de caoutchouc, il est connu d'utiliser un activateur de vulcanisation des élastomères diéniques, tel que la diphénylguanidine qui permet de réduire la phase retard de la vulcanisation. Malheureusement, l'emploi de diphénylguanidine conduit à une augmentation de l'hystérèse de la composition de caoutchouc, ce qui est préjudiciable pour une bonne performance de résistance au roulement du pneumatique.

La Demanderesse poursuivant ses recherches a trouvé une solution pour réduire le temps de séjour dans la presse avec un compromis entre les propriétés de rigidité et d'hystérèse de la composition de caoutchouc moins pénalisant que l'emploi de diphénylguanidine.

Ainsi, un premier objet de l'invention est une composition de caoutchouc à base au moins d'une matrice élastomère, d'une charge renforçante et d'un système de vulcanisation, la matrice élastomère comprenant un élastomère fortement saturé et de 0 à moins de 30 pce de caoutchouc naturel, l'élastomère diénique fortement saturé contenant des unités 1,3-diène et plus de 50% en mole d'unités éthylène, le système de vulcanisation comprenant un sel dithiosulfate de formule (I),

MO₃S-S-A-S-SO₃M (I)

le symbole A représentant un groupe alcanediyle ou un groupe comportant deux motifs alcanediyle ou plus, lesquels motifs sont raccordés deux à deux par l'intermédiaire d'un atome d'oxygène ou de soufre, d'un groupe de formule ―SO₂-, -NH-, -NH₂⁺-, -N(alkyle en C₁-C₁₆)- ou -COO-, ou d'un groupe arylène ou cycloalkylène et le symbole M représentant un atome de métal.

L'invention concerne aussi un procédé pour fabriquer la composition de caoutchouc conforme à l'invention qui comprend les étapes suivantes :
a) Incorporer à la matrice élastomère la charge renforçante, le cas échéant d'autres ingrédients de la composition de caoutchouc à l'exception du sel dithiosulfate, du soufre et d'accélérateur de vulcanisation constituant le système de vulcanisation,
b) Malaxer thermomécaniquement le mélange obtenu à l'étape a) jusqu'à atteindre une température maximale comprise entre 110°C et 190°C,
c) Refroidir l'ensemble à une température inférieure à 100°C,
d) Incorporer ensuite le sel dithiosulfate, le soufre et l'accélérateur de vulcanisation,
e) Malaxer le tout jusqu'à une température maximale inférieure à 110°C pour obtenir une composition de caoutchouc.

### I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Dans la présente demande, on entend par « matrice élastomère » l'ensemble des élastomères présents dans la composition de caoutchouc. Par l'expression « partie en poids pour cent parties en poids d'élastomère » (ou pce), il faut entendre au sens de la présente invention, la part, en masse pour cent parties d'élastomère présent dans la composition de caoutchouc.

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation.

L'élastomère fortement saturé comprend des unités éthylène résultant de la polymérisation d'éthylène. De manière connue, l'expression « unité éthylène » fait référence au motif -(CH₂-CH₂)- résultant de l'insertion de l'éthylène dans la chaîne élastomère. L'élastomère fortement saturé est riche en unité éthylène, puisque les unités éthylène représentent plus de 50% en mole de l'ensemble des unités monomères de l'élastomère fortement saturé. De préférence, elles représentent plus de 60% en mole de l'ensemble des unités monomères de l'élastomère fortement saturé. De manière plus préférentielle, le taux d'unité éthylène dans l'élastomère fortement saturé est d'au moins 65% en mole de l'ensemble des unités monomères de l'élastomère. Autrement dit, l'élastomère fortement saturé contient plus de 60% en mole d'unité éthylène, préférentiellement au moins 65% en mole d'unité éthylène.

L'élastomère fortement saturé comprend aussi des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène.

Selon un premier mode de réalisation de l'invention, l'élastomère fortement saturé contient des unités UD de formule (I) et le cas échéant peut contenir des unités UE de formule (II).

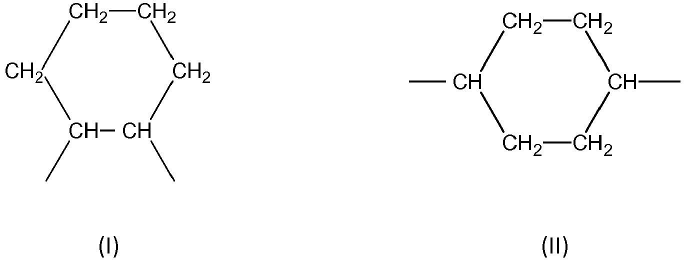

De préférence, l'élastomère fortement saturé contient les unités UA, UB, UC, UD et UE suivantes réparties de façon statistique selon les pourcentages molaires indiqués ci-après

| | | |
|---|---|---|
| UA) | —CH₂—CH₂— | selon un pourcentage molaire de m% |
| UB) | ―CH₂-CH=CH-CH₂- | selon un pourcentage molaire de n% |
| UC) | ―CH₂-CH(CH=CH₂)- | selon un pourcentage molaire de o% |
| UD) | 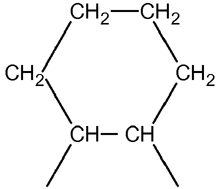 | selon un pourcentage molaire de p% |
| UE) | 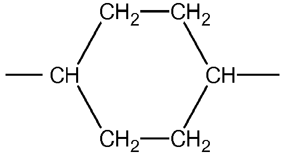 | selon un pourcentage molaire de q% |

▪ m, n, o, p et q étant des nombres allant de 0 à 100,
▪ m > 50
▪ n + o > 0
▪ p > 0
▪ q ≥ 0,
▪ les pourcentages molaires respectifs de m, n, o, p et q étant calculés sur la base de la somme de m+ n + o + p + q qui est égale à 100.

De manière plus préférentielle,
▪ 0 < o + p ≤ 25
▪ o + p + q ≥ 5
▪ n + o >0
▪ q ≥ 0,
▪ les pourcentages molaires respectifs de m, n, o, p et q étant calculés sur la base de la somme de m+ n + o + p + q qui est égale à 100.

De manière encore plus préférentielle, l'élastomère fortement saturé présente au moins l'un des critères suivants, et préférentiellement tous :
▪ m ≥ 65
▪ n + o + p + q ≥ 15, de préférence n + o + p + q ≥ 20
▪ 10 ≥ p + q ≥ 2
▪ 1 ≥ n / (o + p + q )
▪ lorsque q est non nul, 20 ≥ p / q ≥ 1.

Avantageusement q est égal à 0.

L'élastomère fortement saturé est préférentiellement un copolymère d'éthylène et de 1,3-butadiène.

Quel que soit le mode de réalisation de l'invention, y compris dans les variantes, l'élastomère fortement saturé est préférentiellement statistique.

L'élastomère fortement saturé peut être obtenu selon différentes méthodes de synthèses connues de l'homme du métier, notamment en fonction des valeurs visées de m, n, o, p, q et r. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse.

L'élastomère fortement saturé utile aux besoins de l'invention peut être constitué d'un mélange d'élastomères diéniques fortement saturés qui se différencient des uns des autres par leurs microstructures ou par leurs macrostructures.

La composition de caoutchouc peut contenir en plus de l'élastomère fortement saturé un deuxième élastomère diénique. On entend par élastomère diénique un élastomère constitué au moins en partie (i.e., un homopolymère ou un copolymère) d'unités monomères diènes (monomères porteurs de deux doubles liaisons carbone-carbone, conjuguées ou non). Le deuxième élastomère peut être choisi dans le groupe des élastomères diéniques fortement insaturés constitué par les polybutadiènes, les polyisoprènes, les copolymères de butadiène, les copolymères d'isoprène et leur mélange. On appelle un élastomère fortement insaturé un élastomère qui contient plus de 50% en mole d'unité diénique. Si le deuxième élastomère diénique est un caoutchouc naturel, la teneur en caoutchouc naturel est supérieure et égale à 0 pce et inférieure à 30 pce.

La teneur de l'élastomère fortement saturé dans la composition de caoutchouc est préférentiellement supérieure à 70 pce, plus préférentiellement supérieure à 90 pce.

Le sel dithiosulfate utile aux besoins de l'invention est un composé qui porte deux groupes ―S-SO₃M et répond à la formule (I)

MO₃S-S-A-S-SO₃M (I)

le symbole A représentant un groupe alcanediyle ou un groupe comportant deux motifs alcanediyle ou plus, lesquels motifs sont raccordés deux à deux par l'intermédiaire d'un atome d'oxygène ou de soufre, d'un groupe de formule ―SO₂-, -NH-, -NH₂⁺-, -N(alkyle en C₁-C₁₆)- ou -COO-, ou d'un groupe arylène ou cycloalkylène et le symbole M représentant un atome de métal. Le sel dithiosulfate peut se présenter sous la forme d'un de ses hydrates, notamment monohydate ou dihydrate.

Par « alkyle en C₁-C₁₆ », on entend un alkyle qui contient de 1 à 16 atomes de carbone.

Le sel dithiosulfate appartient à la famille des composés qui portent au moins deux groupes -SSO₃M, composés bien connus, puisqu'ils sont utilisés comme agent anti-réversion dans les compositions de caoutchouc à base de caoutchouc naturel. La Demanderesse a découvert que le sel de formule (I) agit comme activateur de la vulcanisation des élastomères fortement saturés contenant plus de 50% en mole d'unité éthylène. L'utilisation du sel permet donc de réduire le temps de séjour dans la presse de cuisson d'une composition de caoutchouc contenant l'élastomère fortement saturé tout en conférant à la composition de caoutchouc un compromis acceptable entre les propriétés de rigidité et d'hystérèse. Même, ce compromis est amélioré en comparaison à celui obtenu dans le cas où un activateur de vulcanisation bien connu comme la diphénylguanidine est utilisé à la place. L'utilisation du sel dithiosulfate comme activateur dans la composition de caoutchouc est d'autant plus intéressante que la composition de caoutchouc est riche en l'élastomère fortement saturé. On appelle une composition riche en l'élastomère fortement saturé dès lors qu'elle contient plus de 70 pce de l'élastomère fortement saturé, de préférence plus de 90 pce de l'élastomère fortement saturé.

L'atome de métal représenté par le symbole M peut être un atome de métal alcalin, de métal alcalino-terreux ou de métal de transition. Le symbole M désigne préférentiellement un atome de métal alcalin, plus préférentiellement un atome de sodium ou de potassium, encore plus préférentiellement un atome de sodium.

Le symbole A désigne préférentiellement un groupe alcanediyle de formule ―(CH₂)ₙ-, n étant un nombre entier allant de 3 à 10, plus préférentiellement un groupe 1,6-hexanediyle.

Le taux de sel dithiosulfate utilisé dans la composition de caoutchouc est ajusté par l'homme du métier en fonction de temps de séjour souhaité dans la presse et en fonction de la rigidité souhaitée de la composition de caoutchouc. Il peut varier typiquement dans un domaine allant de 0.5 à 5 pce, de préférence de 0.8 à 2 pce. Le taux est exprimé pour la molécule de formule (I). Dans le cas où le sel thiosulfate est utilisé sous la forme d'un hydrate, la part de la molécule d'eau ou des molécules d'eau dans la forme hydrate doit être prise en compte pour satisfaire la bonne teneur en le sel dithiosulfate de formule (I).

Le système de vulcanisation est un système de réticulation à base de soufre (ou d'un agent donneur de soufre) et d'un accélérateur de vulcanisation, en particulier un accélérateur primaire. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique.

Le soufre est utilisé à un taux préférentiel compris entre 0.5 et 12 pce, en particulier entre 1 et 10 pce. L'accélérateur primaire de vulcanisation est utilisé à un taux préférentiel compris entre 0.5 et 10 pce, plus préférentiellement compris entre 0.5 et 5 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, en particulier des accélérateurs de types sulfénamides. A titre d'exemples de tels accélérateurs, on peut citer notamment les composés suivants : N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS") et les mélanges de ces composés.

La charge renforçante peut comprendre tout type de charge connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les compositions de caoutchouc utilisables pour la fabrication de pneumatique (noirs dits de grade pneumatique). Les noirs de carbone peuvent être utilisés à l'état isolé, tels que disponibles commercialement, ou sous tout autre forme, par exemple comme support de certains des additifs de caoutchouterie utilisés. On peut citer plus particulièrement les noirs de carbone renforçants des séries 100 et 200, 300, ou les noirs de série 500, 600 ou 700 (grades ASTM).

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc diénique destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

De manière préférentielle, le taux de charge renforçante totale est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

La composition de caoutchouc peut comporter également tout ou partie des additifs usuels habituellement utilisés dans les compositions d'élastomères utilisables pour la fabrication de pneumatiques. Ces additifs peuvent être par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des pigments, des agents de protection tels que cires anti-ozone, anti-ozonants chimiques, anti-oxydants.

La composition de caoutchouc peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception du sel dithiosulfate, du soufre ou du donneur de soufre et de l'accélérateur de vulcanisation. La durée totale du malaxage, dans cette phase non-productive, est de préférence comprise entre 1 et 15 min. Après refroidissement du mélange ainsi obtenu au cours de la première phase non-productive, on incorpore alors le sel dithiosulfate, le soufre ou le donneur de soufre et l'accélérateur de vulcanisation à basse température, généralement dans un mélangeur externe tel qu'un mélangeur à cylindres; le tout est alors mélangé (phase productive) pendant quelques minutes, par exemple entre 2 et 15 min.

Selon un mode de réalisation préférentiel de l'invention, la composition de caoutchouc conforme à l'invention est préparée par un procédé qui comprend les étapes suivantes :
a. Incorporer à la matrice élastomère la charge renforçante, le cas échéant d'autres ingrédients de la composition de caoutchouc à l'exception du sel dithiosulfate, du soufre et d'accélérateur de vulcanisation constituant le système de vulcanisation,
b. Malaxer thermomécaniquement le mélange obtenu à l'étape a) jusqu'à atteindre une température maximale comprise entre 110°C et 190°C,
c. Refroidir l'ensemble à une température inférieure à 100°C,
d. Incorporer ensuite le sel dithiosulfate, le soufre et l'accélérateur de vulcanisation,
e. Malaxer le tout jusqu'à une température maximale inférieure à 110°C pour obtenir une composition de caoutchouc.

La composition de caoutchouc peut être soit à l'état cru (avant vulcanisation), soit à l'état cuit (après vulcanisation).

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1 Tests et mesures :

### II.1-1 Détermination de la microstructure des élastomères :

La microstructure des élastomères est déterminée par analyse RMN ¹H, supplée par l'analyse RMN ¹³C lorsque la résolution des spectres RMN du ¹H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

### 11.1-2 Détermination de la macrostructure des élastomères :

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### 11.1-3 Propriétés dynamiques :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm de hauteur et de 400 mm² de section), soumis à une sollicitation sinusoïdale en cisaillement simple alterné, à la fréquence de 10Hz, à 60°C. On effectue un balayage en amplitude de déformation de 0,1% à 100% (cycle aller), puis de 100% à 0,1% (cycle retour). Les résultats exploités sont le module complexe de cisaillement dynamique G^{∗} et le facteur de perte tan(δ). Sur le cycle retour, on enregistre la valeur du G^{∗} à 50% de déformation ainsi que le facteur de perte, tan(δ)max.

### 11.1-4 Propriétés de vulcanisation :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction vulcanisation. Les mesures sont traitées selon la norme DIN 53529 - partie 2 (mars 1983). Ti est le délai d'induction, c'est-à-dire le temps nécessaire au début de la réaction de vulcanisation. Tα (par exemple T95) est le temps nécessaire pour atteindre une conversion de a%, c'est-à-dire a% (par exemple 95%) de l'écart entre les couples minimum et maximum.

### II.2 Préparation des compositions de caoutchouc :

Quatorze compositions de caoutchouc T1, T2, T3, T4, T5, T6, T7, T8, C1, C2, C3, C4, C5 et C6, dont le détail de la formulation figure dans les tableaux 1 et 3, ont été préparées de la manière suivante :
On introduit dans un mélangeur interne (taux de remplissage final : environ 70% en volume), dont la température initiale de cuve est d'environ 80°C, successivement l'élastomère, la charge renforçante ainsi que les divers autres ingrédients à l'exception du sel dithiosulfate, de la diphénylguanidine, du soufre et de l'accélérateur de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore la diphénylguanidine ou le sel dithiosulfate, le soufre et l'accélérateur de vulcanisation sur un mélangeur (homo-finisseur) à 30 °C, en mélangeant le tout (phase productive) pendant un temps approprié (par exemple une dizaine de minutes).

Toutes les compositions de caoutchouc contiennent un élastomère saturé. Les compositions de caoutchouc C1 à C6 sont des compositions de caoutchouc dont le système de vulcanisation comprend un sel dithiosulfate. Les compositions C1 à C3 se différencient les unes des autres par le taux de sel dithiosulfate (respectivement 1 pce, 1.5 pce et 2 pce). Les compositions de caoutchouc C4 à C6 sont des compositions de caoutchouc dont le système de vulcanisation comprend 1.5 pce d'un sel dithiosulfate et elles sont différentes les unes des autres par le taux de caoutchouc naturel (respectivement 5 pce, 10 pce et 20 pce). La composition de caoutchouc T1, composition témoin, diffère des compositions C1 à C3 en ce qu'elle ne contient pas de sel dithiosulfate. La composition de caoutchouc T2, composition comparative, diffère de C1 à C3, en ce qu'elle contient de la diphénylguanidine (1.5 pce) à la place du sel dithiosulfate. Les compositions de caoutchouc T3 à T5, compositions respectivement comparatives à C4, C5 et C6, diffèrent de C4 à C6 en ce qu'elles ne contiennent pas de sel dithiosulfate. Les compositions de caoutchouc T6 à T8, compositions respectivement comparatives à C4, C5 et C6, diffèrent de C4 à C6 en ce qu'elles contiennent de la diphénylguanidine (1.5 pce) à la place du sel dithiosulfate.
Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées. Les propriétés de vulcanisation à 150°C et les propriétés dynamiques des compositions de caoutchouc sont mesurées après une cuisson au T95 à 150°C.

### II.3 Résultats :

Les résultats figurent dans le tableau 2 et tableau 4.

Pour la composition témoin T1, le temps nécessaire au début de la réaction de vulcanisation est supérieur à 15 minutes. Les compositions C1 à C3 qui contiennent le sel dithiosulfate commencent à vulcaniser à un temps bien inférieur à 15 min (respectivement 13, 11 et 9.5 minutes) : l'ajout d'un sel dithiosulfate permet de réduire ce temps nécessaire au démarrage de la vulcanisation jusqu'à plus de 30%. Ce démarrage plus tôt de la vulcanisation permet donc de réduire le temps de cuisson sous presse. Ce résultat est obtenu sans être au détriment de la rigidification, puisque les rigidités des compositions C1 à C3 sont du même ordre de grandeur que la composition témoin T1. Par ailleurs, on note aussi que l'hystérèse des compositions C1 à C3 sont quasi identiques à celle de la composition témoin T1. On constate aussi qu'une variation de 1 pce à 2 pce de sel dithiosulfate s'accompagne d'une variation de tan(δ)max d'au plus 0.02 point. Le peu d'influence du taux de dithiosulfate sur l'hystérèse présente un avantage dans la préparation des compositions de caoutchouc, puisqu'elle assure une constance des propriétés d'hystérèse malgré des variations de taux de dithiosulfate qui peuvent aller du simple au double. L'intérêt du sel dithiosulfate est confirmé dans les compositions C4 à C6 contenant du caoutchouc naturel par rapport respectivement aux compositions témoins T3 à T5.

En revanche, l'ajout de diphénylguanidine ne donne pas un compromis entre les propriétés de vulcanisation et les propriétés dynamiques aussi intéressant que le sel dithiosulfate au même taux (1.5 pce). La réduction du temps nécessaire au début de la réaction de vulcanisation obtenue avec la diphénylguanidine se fait au détriment du compromis de propriétés de rigidité et d'hystérèse, l'hystérèse étant fortement augmentée par rapport à la composition témoin T1. Dans les compositions T6 à T8 contenant du caoutchouc naturel, l'ajout de diphénylguanidine dégrade encore plus le compromis de propriétés Ti, rigidité et hystérèse par rapport respectivement aux compositions T3 à T5. Les compositions T6 à T8 présentent une réduction trop grande du Ti et une augmentation trop importante de l'hystérèse.

En résumé, l'utilisation du sel dithiosulfate permet de réduire le temps de séjour dans la presse de cuisson d'une composition de caoutchouc contenant l'élastomère fortement saturé tout en conférant à la composition de caoutchouc un compromis acceptable entre les propriétés de rigidité et d'hystérèse. Même, ce compromis est amélioré en comparaison à celui obtenu dans le cas où un activateur de vulcanisation bien connu comme la diphénylguanidine est utilisé à la place.

**Tableau 1**

| Composition | T1 | T2 | C1 | C2 | C3 |
|---|---|---|---|---|---|
| Elastomère (1) | 100 | 100 | 100 | 100 | 100 |
| Noir de carbone (2) | 40 | 40 | 40 | 40 | 40 |
| Antioxydant (3) | 2.0 | 2.0 | 2.0 | 2.0 | 2.0 |
| Paraffine | 1.0 | 1.0 | 1.0 | 1.0 | 1.0 |
| Acide stéarique (4) | 1.5 | 1.5 | 1.5 | 1.5 | 1.5 |
| Oxyde de Zinc (5) | 2.5 | 2.5 | 2.5 | 2.5 | 2.5 |
| Accélérateur (6) | 1.3 | 1.3 | 1.3 | 1.3 | 1.3 |
| Soufre | 0.6 | 0.6 | 0.6 | 0.6 | 0.6 |
| DPG (7) | 0 | 1.5 | 0 | 0 | 0 |
| Sel dithiosulfate (8) | 0 | 0 | 1.0 | 1.5 | 2.0 |

| | | | | | |
|---|---|---|---|---|---|
| (1) Elastomère contenant 71% unité UA, 8% unité UB, 14% unité UC et 7% unité UD (% molaire), préparé selon un procédé de polymérisation d'éthylène et de butadiène conforme à l'exemple 4-2 du brevet EP 1 954 705 B1 au nom des Demanderesses, le temps de polymérisation étant ajusté de manière à obtenir une masse molaire Mn = 153 000 g/mol avec un indice de polydispersité égal à 1.4 ; (2) Noir de carbone de grade N234 selon la norme ASTM D-1765 (3) N-1,3-diméthylbutyl-N-phénylparaphénylènediamine « Santoflex 6-PPD » de la société Flexsys (4) Stéarine « Pristerene 4931 » de la société Uniqema (5) Oxyde de zinc de grade industriel de la société Umicore (6) N-cyclohexyl-2-benzothiazyle sulfénamide « Santocure CBS » de la société Flexsys (7) Diphénylguanidine (8) 1,6-hexaméthylène bisthiosulfate de disodium, dihydrate | | | | | |

**Tableau 2**

| Composition | T1 | T2 | C1 | C2 | C3 |
|---|---|---|---|---|---|
| Ti (min) | 15.5 | 6.5 | 13 | 11 | 9.5 |
| G^{∗} (MPa) | 1.60 | 1.89 | 1.52 | 1.59 | 1.55 |
| tan(δ)max | 0.18 | 0.26 | 0.19 | 0.18 | 0.20 |

**Tableau 3**

| Composition | T3 | T4 | T5 | T6 | T7 | T8 | C4 | C5 | C6 |
|---|---|---|---|---|---|---|---|---|---|
| Elastomère (1) | 95 | 90 | 80 | 95 | 90 | 80 | 95 | 90 | 80 |
| Elastomère (2) | 5 | 10 | 20 | 5 | 10 | 20 | 5 | 10 | 20 |
| Noir de carbone (3) | 40 | 40 | 40 | 40 | 40 | 40 | 40 | 40 | 40 |
| Antioxydant (4) | 2.0 | 2.0 | 2.0 | 2.0 | 2.0 | 2.0 | 2.0 | 2.0 | 2.0 |
| Paraffine | 1.0 | 1.0 | 1.0 | 1.0 | 1.0 | 1.0 | 1.0 | 1.0 | 1.0 |
| Acide stéarique (5) | 1.5 | 1.5 | 1.5 | 1.5 | 1.5 | 1.5 | 1.5 | 1.5 | 1.5 |
| Oxyde de Zinc (6) | 2.5 | 2.5 | 2.5 | 2.5 | 2.5 | 2.5 | 2.5 | 2.5 | 2.5 |
| Accélérateur (7) | 1.3 | 1.3 | 1.3 | 1.3 | 1.3 | 1.3 | 1.3 | 1.3 | 1.3 |
| Soufre | 0.6 | 0.6 | 0.6 | 0.6 | 0.6 | 0.6 | 0.6 | 0.6 | 0.6 |
| DPG (8) | 0 | 0 | 0 | 1.5 | 1.5 | 1.5 | 0 | 0 | 0 |
| Sel dithiosulfate (9) | 0 | 0 | 0 | 0 | 0 | 0 | 1.5 | 1.5 | 1.5 |

| | | | | | | | | | |
|---|---|---|---|---|---|---|---|---|---|
| (1) Elastomère contenant 71% unité UA, 8% unité UB, 14% unité UC et 7% unité UD (% molaire), préparé selon un procédé de polymérisation d'éthylène et de butadiène conforme à l'exemple 4-2 du brevet EP 1 954 705 B1 au nom des Demanderesses, le temps de polymérisation étant ajusté de manière à obtenir une masse molaire Mn = 153 000 g/mol avec un indice de polydispersité égal à 1.4 ; (2) Caoutchouc naturel (3) Noir de carbone de grade N234 selon la norme ASTM D-1765 (4) N-1,3-diméthylbutyl-N-phénylparaphénylènediamine « Santoflex 6-PPD » de la société Flexsys (5) Stéarine « Pristerene 4931 » de la société Uniqema (6) Oxyde de zinc de grade industriel de la société Umicore (7) N-cyclohexyl-2-benzothiazyle sulfénamide « Santocure CBS » de la société Flexsys (8) Diphénylguanidine (9) 1,6-hexaméthylène bisthiosulfate de disodium, dihydrate | | | | | | | | | |

**Tableau 4**

| Composition | T3 | T4 | T5 | T6 | T7 | T8 | C4 | C5 | C6 |
|---|---|---|---|---|---|---|---|---|---|
| Ti (min) | 12.0 | 11.3 | 10.6 | 0.3 | 0.0 | 0.0 | 8.9 | 9.7 | 9.1 |
| G^{∗} (MPa) | 1.85 | 1.83 | 1.70 | 1.84 | 1.85 | 1.72 | 1.88 | 1.84 | 1.75 |
| tan(δ)max | 0.20 | 0.20 | 0.21 | 0.26 | 0.27 | 0.26 | 0.20 | 0.21 | 0.21 |

## Revendications

1. Composition de caoutchouc à base au moins d'une matrice élastomère, d'une charge renforçante et d'un système de vulcanisation, la matrice élastomère comprenant un élastomère fortement saturé et de 0 à moins de 30 pce de caoutchouc naturel, l'élastomère diénique fortement saturé contenant des unités 1,3-diène et plus de 50% en mole d'unités éthylène, le système de vulcanisation comprenant un sel dithiosulfate de formule (I)
MO₃S-S-A-S-SO₃M (I)
le symbole A représentant un groupe alcanediyle ou un groupe comportant deux motifs alcanediyle ou plus, lesquels motifs sont raccordés deux à deux par l'intermédiaire d'un atome d'oxygène ou de soufre, d'un groupe de formule ―SO₂-,-NH-, -NH₂⁺-, -N(alkyle en C₁-C₁₆)- ou -COO-, ou d'un groupe arylène ou cycloalkylène et le symbole M représentant un atome de métal.

2. Composition de caoutchouc selon la revendication 1 dans laquelle l'élastomère fortement saturé contient plus de 60% en mole d'unité éthylène, préférentiellement au moins 65% en mole d'unité éthylène.

3. Composition de caoutchouc selon l'une quelconque des revendications 1 à 2 dans laquelle le 1,3-diène est le 1,3-butadiène.

4. Composition de caoutchouc selon l'une quelconque des revendications 1 à 3 dans laquelle l'élastomère fortement saturé contient des unités UD de formule (I).

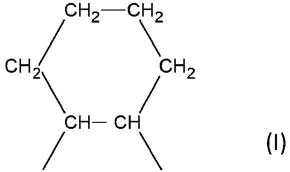

5. Composition de caoutchouc selon la revendication 4 dans laquelle l'élastomère fortement saturé contient les unités UA, les unités UB, les unités UC, les unités UD et les unités UE suivantes réparties de façon statistique
| | | |
|---|---|---|
| UA) | —CH₂—CH₂― | selon un pourcentage molaire de m% |
| UB) | ―CH₂-CH=CH-CH₂- | selon un pourcentage molaire de n% |
| UC) | ―CH₂-CH(CH=CH₂)- | selon un pourcentage molaire de o% |
| UD) | 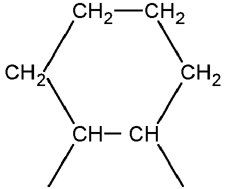 | selon un pourcentage molaire de p% |
| UE) | 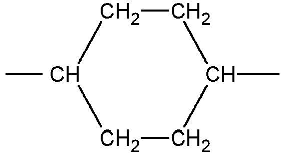 | selon un pourcentage molaire de q% |
▪ m, n, o, p et q étant des nombres allant de 0 à 100,
▪ m > 50
▪ n + o > 0
▪ p > 0
▪ q ≥ 0,
les pourcentages molaires respectifs de m, n, o, p et q étant calculés sur la base de la somme de m+ n + o + p + q qui est égale à 100.

6. Composition de caoutchouc selon l'une quelconque des revendications 1 à 5 dans laquelle l'élastomère fortement saturé est un copolymère de 1,3-butadiène et d'éthylène.

7. Composition de caoutchouc selon l'une quelconque des revendications 1 à 6 dans laquelle la composition de caoutchouc contient plus de 70 pce de l'élastomère fortement saturé.

8. Composition de caoutchouc selon l'une quelconque des revendications 1 à 7 dans laquelle la composition de caoutchouc contient plus de 90 pce de l'élastomère fortement saturé.

9. Composition de caoutchouc selon l'une quelconque des revendications 1 à 8 dans laquelle M désigne un atome d'un métal alcalin, un atome de métal alcalino-terreux ou un atome de métal de transition.

10. Composition de caoutchouc selon l'une quelconque des revendications 1 à 9 dans laquelle M désigne un atome de sodium ou de potassium.

11. Composition de caoutchouc selon l'une quelconque des revendications 1 à 10 dans laquelle A désigne un groupe alcanediyle de formule ―(CH₂)ₙ- , n étant un nombre entier allant de 3 à 10.

12. Composition de caoutchouc selon l'une quelconque des revendications 1 à 11 dans laquelle le taux de sel dithiosulfate représente de 0.5 à 5 pce et plus préférentiellement de 0.8 à 2 pce.

13. Composition de caoutchouc selon l'une quelconque des revendications 1 à 12 dans laquelle la charge renforçante comprend un noir de carbone.

14. Composition de caoutchouc selon l'une quelconque des revendications 1 à 13 dans laquelle le système de vulcanisation comprend du soufre et un accélérateur de vulcanisation, de préférence une sulfénamide.

15. Procédé de fabrication d'une composition de caoutchouc définie selon l'une quelconque des revendications 1 à 14 qui comprend les étapes suivantes :
a. Incorporer à la matrice élastomère la charge renforçante, le cas échéant d'autres ingrédients de la composition de caoutchouc à l'exception du sel dithiosulfate, du soufre et d'accélérateur de vulcanisation constituant le système de vulcanisation,
b. Malaxer thermomécaniquement le mélange obtenu à l'étape a) jusqu'à atteindre une température maximale comprise entre 110°C et 190°C,
c. Refroidir l'ensemble à une température inférieure à 100°C,
d. Incorporer ensuite le sel dithiosulfate, le soufre et l'accélérateur de vulcanisation,
e. Malaxer le tout jusqu'à une température maximale inférieure à 110°C pour obtenir une composition de caoutchouc.

## Patentansprüche

1. Kautschukzusammensetzung auf Basis von mindestens einer Elastomermatrix, einem verstärkenden Füllstoff und einem Vulkanisationssystem, wobei die Elastomermatrix ein hochgesättigtes Elastomer und 0 bis weniger als 30 phe Naturkautschuk umfasst, wobei das hochgesättigte Dienelastomer 1,3-Dieneinheiten und mehr als 50 Mol-% Ethyleneinheiten enthält, wobei das Vulkanisationssystem ein Dithiosulfatsalz der Formel (I) umfasst:
MO₃S-S-A-S-SO₃M (I),
wobei das Symbol A für eine Alkandiylgruppe oder eine Gruppe mit zwei oder mehr Alkandiyleinheiten steht, wobei die Einheiten paarweise über ein Sauerstoff- oder Schwefelatom, über eine Gruppe der Formel -SO₂-, -NH-, -NH₂⁺-, -N(C₁-C₁₆-Alkyl)- oder -COO- oder über eine Arylen- oder Cycloalkylengruppe verbunden sind, und wobei das Symbol M für ein Metallatom steht.

2. Kautschukzusammensetzung nach Anspruch 1, wobei das hochgesättigte Elastomer mehr als 60 Mol-% Ethyleneinheiten, vorzugsweise mindestens 65 Mol-% Ethyleneinheiten, enthält.

3. Kautschukzusammensetzung nach einem der Ansprüche 1 bis 2, wobei es sich bei dem 1,3-Dien um 1,3-Butadien handelt.

4. Kautschukzusammensetzung nach einem der Ansprüche 1 bis 3, wobei das hochgesättigte Elastomer UD-Einheiten der Formel (I) enthält:

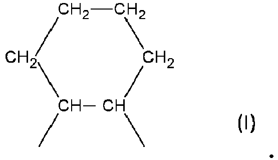

5. Kautschukzusammensetzung nach Anspruch 4, wobei das hochgesättigte Elastomer die folgenden UA-Einheiten, UB-Einheiten, UC-Einheiten, UD-Einheiten und UE-Einheiten in statistischer Verteilung enthält:
UA) -CH₂-CH₂-
gemäß einem Molprozentanteil von m %
UB) ―CH₂-CH=CH-CH₂--
gemäß einem Molprozentanteil von n %
UC) -CH₂-CH(CH=CH₂)-
gemäß einem Molprozentanteil von o %
UD) 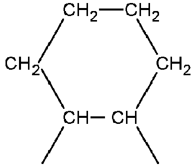 gemäß einem Molprozentanteil von p %
UE) 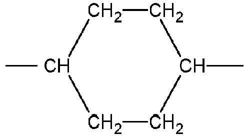 gemäß einem Molprozentanteil von q %,
▪ m, n, o, p und q für Zahlen im Bereich von 0 bis 100 stehen,
▪ m > 50,
▪ n + o > 0,
▪ p > 0,
▪ q ≥ 0,
wobei die jeweiligen Molprozentanteile von m, n, o, p und q auf der Basis der Summe von m + n + o + p + q, die gleich 100 ist, berechnet werden.

6. Kautschukzusammensetzung nach einem der Ansprüche 1 bis 5, wobei es sich bei dem hochgesättigten Elastomer um ein Copolymer von 1,3-Butadien und Ethylen handelt.

7. Kautschukzusammensetzung nach einem der Ansprüche 1 bis 6, wobei die Kautschukzusammensetzung mehr als 70 phe des hochgesättigten Elastomers enthält.

8. Kautschukzusammensetzung nach einem der Ansprüche 1 bis 7, wobei die Kautschukzusammensetzung mehr als 90 phe des hochgesättigten Elastomers enthält.

9. Kautschukzusammensetzung nach einem der Ansprüche 1 bis 8, wobei M ein Alkalimetallatom, ein Erdalkalimetallatom oder ein Übergangsmetallatom bezeichnet.

10. Kautschukzusammensetzung nach einem der Ansprüche 1 bis 9, wobei M ein Natrium- oder Kaliumatom bezeichnet.

11. Kautschukzusammensetzung nach einem der Ansprüche 1 bis 10, wobei A eine Alkandiylgruppe der Formel ―(CH₂)ₙ- bezeichnet, wobei n für eine ganze Zahl im Bereich von 3 bis 10 steht.

12. Kautschukzusammensetzung nach einem der Ansprüche 1 bis 11, wobei der Gehalt an Dithiosulfatsalz 0,5 bis 5 phe und weiter bevorzugt 0,8 bis 2 phe ausmacht.

13. Kautschukzusammensetzung nach einem der Ansprüche 1 bis 12, wobei der verstärkende Farbstoff einen Ruß umfasst.

14. Kautschukzusammensetzung nach einem der Ansprüche 1 bis 13, wobei das Vulkanisationssystem Schwefel und einen Vulkanisationsbeschleuniger, vorzugsweise ein Sulfenamid, umfasst.

15. Verfahren zur Herstellung einer Kautschukzusammensetzung gemäß einem der Ansprüche 1 bis 14, das folgende Schritte umfasst:
a. Einarbeiten des verstärkenden Füllstoffs und gegebenenfalls anderer Bestandteile der Kautschukzusammensetzung mit Ausnahme des Dithiosulfatsalzes, des Schwefels und des Vulkanisationsbeschleunigers, die das Vulkanisationssystem bilden, in die Elastomermatrix,
b. thermomechanisches Kneten der in Schritt a) erhaltenen Mischung bis zum Erreichen einer Höchsttemperatur zwischen 110 °C und 190 °C,
c. Abkühlen des Ganzen auf eine Temperatur von weniger als 100 °C,
d. anschließendes Einarbeiten des Dithiosulfatsalzes, des Schwefels und des Vulkanisationsbeschleunigers,
e. Kneten des Ganzen bis zu einer Höchsttemperatur von weniger als 110 °C zum Erhalt einer Kautschukzusammensetzung.

## Claims

1. Rubber composition based at least on an elastomer matrix, on a reinforcing filler and on a vulcanization system, the elastomer matrix comprising a highly saturated elastomer and from 0 to less than 30 phr of natural rubber, the highly saturated diene elastomer containing 1,3-diene units and more than 50 mol% of ethylene units, the vulcanization system comprising a dithiosulfate salt of formula (I):
MO₃S-S-A-S-SO₃M (I)
the symbol A representing an alkanediyl group or a group comprising two or more alkanediyl units, which units are connected in pairs via an oxygen or sulfur atom, via a group of formula -SO₂-, -NH-, -NH₂⁺-, -N(C₁-C₁₆ alkyl)- or -COO-, or via an arylene or cycloalkylene group, and the symbol M representing a metal atom.

2. Rubber composition according to Claim 1, in which the highly saturated elastomer contains more than 60 mol% of ethylene unit, preferably at least 65 mol% of ethylene unit.

3. Rubber composition according to either one of Claims 1 and 2, in which the 1,3-diene is 1,3-butadiene.

4. Rubber composition according to any one of Claims 1 to 3, in which the highly saturated elastomer contains UD units of formula (I):

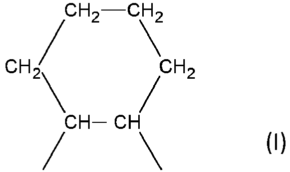

5. Rubber composition according to Claim 4, in which the highly saturated elastomer contains the following units UA, units UB, units UC, units UD and units UE distributed randomly:
| | | |
|---|---|---|
| UA) | —CH₂—CH₂— | according to a molar percentage of m% |
| UB) | ―CH₂-CH=CH-CH₂- | according to a molar percentage of n% |
| UC) | ―CH₂-CH(CH=CH₂)- | according to a molar percentage of o% |
| UD) | 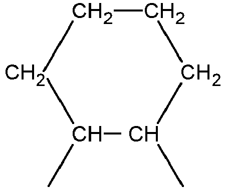 | according to a molar percentage of p% |
| UE) | 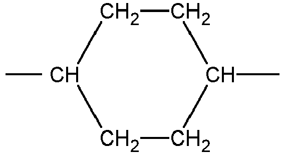 | according to a molar percentage of q% |
▪ m, n, o, p and q being numbers ranging from 0 to 100,
▪ m > 50
▪ n + o > 0
▪ p > 0
▪ q ≥ 0,
the respective molar percentages of m, n, o, p and q being calculated on the basis of the sum of m + n + o + p + q, which is equal to 100.

6. Rubber composition according to any one of Claims 1 to 5, in which the highly saturated elastomer is a copolymer of 1,3-butadiene and of ethylene.

7. Rubber composition according to any one of Claims 1 to 6, in which the rubber composition contains more than 70 phr of the highly saturated elastomer.

8. Rubber composition according to any one of Claims 1 to 7, in which the rubber composition contains more than 90 phr of the highly saturated elastomer.

9. Rubber composition according to any one of Claims 1 to 8, in which M denotes an alkali metal atom, an alkaline earth metal atom or a transition metal atom.

10. Rubber composition according to any one of Claims 1 to 9, in which M denotes a sodium or potassium atom.

11. Rubber composition according to any one of Claims 1 to 10, in which A denotes an alkanediyl group of formula ―(CH₂)ₙ-, n being an integer ranging from 3 to 10.

12. Rubber composition according to any one of Claims 1 to 11, in which the content of dithiosulfate salt represents from 0.5 to 5 phr and more preferably from 0.8 to 2 phr.

13. Rubber composition according to any one of Claims 1 to 12, in which the reinforcing filler comprises a carbon black.

14. Rubber composition according to any one of Claims 1 to 13, in which the vulcanization system comprises sulfur and a vulcanization accelerator, preferably a sulfenamide.

15. Process for the manufacture of a rubber composition defined according to any one of Claims 1 to 14, which comprises the following stages:
a. incorporating, in the elastomer matrix, the reinforcing filler and, if appropriate, other ingredients of the rubber composition, with the exception of the dithiosulfate salt, of the sulfur and of vulcanization accelerator constituting the vulcanization system,
b. thermomechanically kneading the mixture obtained in stage a) until a maximum temperature of between 110°C and 190°C is reached,
c. cooling the combined mixture to a temperature of less than 100°C,
d. subsequently incorporating the dithiosulfate salt, the sulfur and the vulcanization accelerator,
e. kneading everything up to a maximum temperature of less than 110°C, in order to obtain a rubber composition.
